(19) **Europäisches Patentamt**

**European Patent Office**

**Office européen des brevets**

(11) **EP 0 896 139 B1**

(12) **EUROPÄISCHE PATENTSCHRIFT**

(45) Veröffentlichungstag und Bekanntmachung des Hinweises auf die Patenterteilung:
**03.07.2002   Patentblatt 2002/27**

(51) Int Cl.$^7$: **F02B 47/08**, F02D 21/08

(21) Anmeldenummer: **98113922.3**

(22) Anmeldetag: **24.07.1998**

(54) **Verfahren zum Betrieb einer Brennkraftmaschine**

Method for operating a combustion engine

Procédé de fonctionnement d'un moteur à combustion

(84) Benannte Vertragsstaaten:
**DE FR GB IT**

(30) Priorität: **08.08.1997   DE 19734494**

(43) Veröffentlichungstag der Anmeldung:
**10.02.1999   Patentblatt 1999/06**

(73) Patentinhaber: **DaimlerChrysler AG**
**70567 Stuttgart (DE)**

(72) Erfinder: **Gärtner, Uwe**
**73630 Remshalden (DE)**

(56) Entgegenhaltungen:
**EP-A- 0 843 084        DE-A- 2 752 877**
**US-A- 4 333 439        US-A- 5 201 303**

- **MINORU NISHIDA ET ALL: "Closed Loop Control of the EGR Rate Using the Oxygen Sensor" SAE PAPER 880133, 31. Dezember 1988 (1988-12-31), Seiten 6168-6180, XP002105012 new-york**

EP 0 896 139 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betrieb einer Brennkraftmaschine und eine zur Durchführung des Verfahrens geeignete Brennkraftmaschine nach den Oberbegriffen der unabhängigen Ansprüche 1 und 7.

Beim Betrieb einer Brennkraftmaschine ist die Abgasrückführung als wirkungsvolles Mittel zur Emissionssenkung bekannt. Durch Zumischen von bereits verbrannten Abgasen zum Frischgas vor der Verbrennung wird insbesondere die temperaturabhängige Stickstoffoxid-Emission reduziert. Üblicherweise wird durch einen Abgasrückführungskanal aus einer Abgasleitung der Brennkraftmaschine Abgas in eine Einlaßleitung rückgeführt. Die Rückführrate des Abgases, d. h. die Menge des anteilig dem Frischluftstrom in der Einlaßleitung beigemischten Abgasstroms im Verhältnis zur Verbrennungsluftmenge, wird von einer Reglereinheit unter Angleich an betriebspunktabhängig vorgegebene Sollwerte geregelt. Eine Erhöhung der Abgasrückführungsrate mit der Absicht einer weiteren Reduzierung der Stickstoffoxid-Emission wird eine betriebspunktabhängig unterschiedliche Grenze gesetzt, nämlich durch die oberhalb dieser zulässigen Rückführrate zunehmende Ruß- bzw. Partikelemission, dem Kraftverbrauch sowie durch die Verschlechterung der Laufruhe der Brennkraftmaschine.

Die Durchführung einer Regelung der Abgasrückführungsrate erfordert die laufende Erfassung der jeweiligen Rückführungsverhältnisse im Betrieb der Brennkraftmaschine. Einfache Steuerverfahren der rückgeführten Abgasmenge, etwa durch betriebspunktabhängige Steuerung des Abgasrückführungsventils mit einstellbarem öffnungshub, können die Abgasemissionen nur unbefriedigend absenken, da die Rückführungsrate im jeweiligen Betriebspunkt deutlich unterhalb des optimalen Sollwertes liegen muß, um das ohne Rückmeldung des Abgasdurchflusses sonst häufige übertreten der Rußgrenze und die entsprechend hohen Emissionen zu vermeiden.

Aus der EP-0 574 614 A1 ist ein Verfahren zur Regelung der Abgasrückführungsrate bekannt, welches zur Bestimmung des Ist-Wertes des rückgeführten Abgasmassenstroms den Druckabfall an einer Venturi-Düse in dem Abgasrückführungskanal mißt und aus der Druckdifferenz den Durchfluß ermittelt. Da jedoch die Rückströmung des Abgases durch den Abgasrückführungskanal vom Druckgefälle zwischen Abgasleitung und Einlaßleitung der Brennkraftmaschine getrieben wird, verringert der Druckverlust an der Venturi-Düse das zur Rückführung zur Verfügung stehende Druckgefälle. Dabei wird die mögliche Abgasrückführungsrate verringert und es kann in vielen Betriebspunkten der Brennkraftmaschine nicht die optimale Reduzierung der Abgasemissionen erreicht werden. Darüber hinaus ist die Bestimmung des Abgasdurchflusses durch den Abgasrückführungskanal über die Messung des Differenzdruckes sehr ungenau, da genaue Messungen an der Venturi-Düse laminare Strömungsverhältnisse voraussetzen, welche im Abgas von Brennkraftmaschinen praktisch nicht vorkommen. Die mehr oder weniger turbulent auftretenden Abgasströmungen unterschiedlicher Brennkraftmaschinen, insbesondere im Betrieb von aufgeladenen Brennkraftmaschinen, verhindern eine effektive Regelung der Rückführungsrate mit dem bekannten Verfahren.

Die DE 43 37 313 C1 schlägt zur Erfassung der rückgeführten Abgasmenge vor, den Absolutdruck und die Temperatur in der Abgasleitung der Brennkraftmaschine zu messen. Zur Ermittlung der Rückführrate wird als Meßwert neben dem statischen Druck auch der Staudruck des Abgases benötigt. Mit dem bekannten Verfahren ist jedoch eine genaue Bestimmung der Rückführrate, welche für eine optimale Regelung unerläßlich ist, kaum möglich, da die erforderlichen Temperatur- und Druckmeßfühler von sehr hohen Abgastemperaturen beaufschlagt werden. Darüber hinaus führt der hohe Rußpartikelgehalt des Abgases zu einer zunehmenden Verstopfung der Meßfühler mit zunehmender Betriebszeit der Brennkraftmaschine, wodurch die Meßergebnisse zunehmend ungenauer werden und somit letztendlich höhere Abgasemissionen verursacht werden.

Die EP 0 843 048 A2 beschreibt eine mit Abgasrückführung arbeitende Brennkraftmaschine, wobei die Rückführrate des zurückgeführten Abgases aus dem Messsignal eines Sauerstoffsensors ermittelt wird, der in Strömungsrichtung hinter der Einmündung der Abgasrückführungsleitung in die Einlassleitung der Brennkraftmaschine angeordnet ist. In der Auslassleitung der Brennkraftmaschine ist eine Lambda-Sonde angeordnet, aus deren Messsignal mit Aussage über den Sauerstoffgehalt des Abgases das Kraftstoff/Luft-Verhältnis ermittelt wird und zur Regelung der Kraftstoffeinspritzmenge der Brennkraftmaschine herangezogen wird.

Aus dem SAE-paper SAE Art. 880 133 "Closed loop control of the EGR rate using the oxygen sensor" ist eine Einrichtung bekannt, bei der die Abgasrückführungsrate aus dem Sauerstoffgehalt des in die Brennkraftmaschine eintretenden Verbrennungsgases bestimmt wird. Ein Regler für die Abgasrückführung empfängt dazu das Meßsignal eines Sauerstoffsensors, der im Einlaßbereich der Brennkraftmaschine angeordnet ist. Die rückgeführte Abgasmenge wird aus der gemessenen Restsauerstoffmenge durch Vergleich mit der fest vorgegebenen Sauerstoffkonzentration der Umgebungsluft berechnet. Eine präzise Bestimmung der tatsächlichen Rückführmenge ist so jedoch nicht möglich, da eine Vielzahl von Einflußfaktoren auf die Berechnungsgrundlagen unberücksichtigt bleiben müssen, beispielsweise unterschiedliche Sauerstoffkonzentrationen der Umgebungsluft bei Betrieb eines Motorfahrzeugs in verschiedenen Höhenlagen und entsprechend unterschiedliche Verbrennungsverhalten der Brennkraftmaschine. Die in der Rückführung von Abgas liegenden Möglichkeiten zur Reduzierung der Abgasemission der Brennkraftmaschine kann mit der bekannten Einrichtung aufgrund ungenauer Bestimmung der tatsächlichen Rückführrate nicht ausgeschöpft werden.

Der Erfindung liegt die Aufgabe zugrunde, eine maximale Emissionssenkung der Brennkraftmaschine durch Abgasrückführung mit einer möglichst genauen Erfassung und Regelung der Abgasrückführungsrate zu ermöglichen.

Diese Aufgabe wird erfindungsgemäß durch ein Verfahren mit den Merkmalen des Anspruchs 1 oder durch die Ausgestaltung einer Brennkraftmaschine mit den Merkmalen des Anspruches 7 gelöst.

Bei dem Verbrennungsvorgang in der Brennkraftmaschine werden die Kohlenwasserstoffe des Kraftstoffes unter Energiefreisetzung mit Sauerstoff chemisch verbunden. Das Abgas enthält daher erheblich weniger Sauerstoff als die Frischluft, welche der Brennkraftmaschine beim Ladungswechsel zugeführt wird. Die Rückführung des sauerstoffarmen Abgases führt zu einer Reduzierung der Sauerstoffkonzentration im letztlich der Brennkraftmaschine zugeführten Verbrennungsluftstrom gegenüber der angesaugten Frischluft. Erfindungsgemäß wird in den Gasströmen jeweils vor und nach der Einmündung des Abgasrückführungskanals in die Einlaßleitung der jeweilige Sauerstoffgehalt von entsprechend in den jeweiligen Gasstrom einragenden Sauerstoffsensoren gemessen. Die Meßsignale der Sauerstoffsensoren werden der Eingangsseite der Reglereinheit zugeführt, welche aus den Meßergebnissen die Differenz der Sauerstoffkonzentrationen bestimmt und daraus direkt die vorliegende Rückführrate im Abgasrückführungs-Betrieb der Brennkraftmaschine ermittelt. Vorteilhaft erfolgen die Messungen der jeweiligen Sauerstoffgehalte im Verbrennungsluftstrom vor dem Eintritt in die Brennkraftmaschine einerseits und im Abgasstrom andererseits, wodurch aus den Meßergebnissen die jeweils rückgeführte Abgasmenge aufgrund physikalischer Zusammenhänge präzise bestimmbar ist.

Unter Einbeziehung der Rückführungsrate und des Sauerstoffgehaltes im Abgas kann die Reglereinheit das Verbrennungsluftverhältnis bei der Gemischbildung in der Brennkraftmaschine regeln, d. h. das Verhältnis der beim Verbrennungsvorgang verfügbaren Sauerstoffmenge zur erforderlichen Menge für eine vollständige Kraftstoffverbrennung, wobei die Reglereinheit ein weiteres Stellglied ansteuert, welches auf den Frischluftstrom vor der Einmündung des rückgeführten Abgasstromes wirkt. Das Stellglied kann eine Drosselklappe in der Einlaßleitung sein oder auch beispielsweise beim Einsatz der Erfindung für aufgeladene Brennkraftmaschinen eine variable Turbinengeometrie des Abgasturbolators.

Eine besonders genaue Regelung des Verbrennungsluftverhältnisses wird erreicht, wenn die Reglereinheit alternativ oder zusätzlich zum Stellglied mit Wirkung auf den Frischluftstrom die Kraftstoffzumessung einstellt.

Zur präzisen Regelung wird der Reglereinheit betriebspunktabhängig ein Sollwert des Verbrennungsluftverhältnisses vorgegeben, welcher aufgrund der genauen Erfassung der Rückführungsrate im Bereich der maximal rückführbaren Abgasmenge liegt.

In einem Kennfeldspeicher sind vorteilhaft für eine Vielzahl von Betrebspunkten der Brennkraftmaschine die betriebsoptimalen Sollwerte abgelegt, welche die Reglereinheit bedarfsweise als Führungsgröße für die Regelung entnimmt.

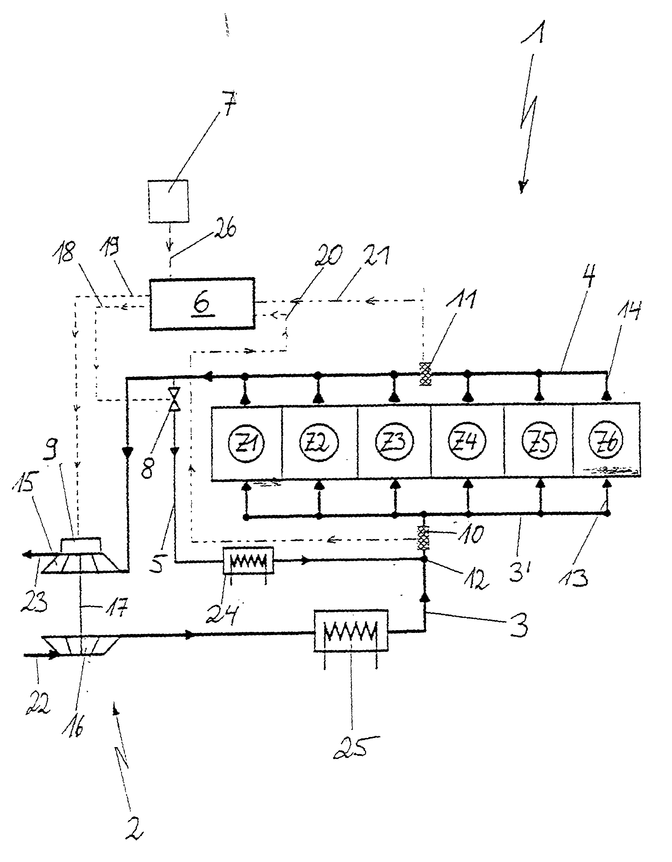

Ein Ausführungsbeispiel der Erfindung ist nachstehend anhand der Zeichnung näher erläutert.

Die einzige Zeichnungsfigur zeigt eine aufgeladende Brennkraftmaschine 1 mit sechs Zylindern Z1 bis Z6 in Reihenanordnung. Jedem der Zylinder Z1 bis Z6 wird jeweils über einen Zylindereinlaß 13 Verbrennungsluft zugeführt. Die Abgase werden jeweils über einen Zylinderauslaß 14 ausgeschoben und durch eine gemeinsame Abgasleitung 4 abgeführt. Ein Abgasturbolader 2 verdichtet atmosphärische Frischluft 22 und drängt über eine Einlaßleitung 3 die Ladeluft in eine Ladeluftleitung 3', welche die Zylindereinlässe 13 aller Zylinder Z1 bis Z6 speist. Eine Turbine 15 des Abgasturbuladers 2 ist in bekannter Weise in der Abgasleitung 4 angeordnet und wird vom Abgasstrom 23 durchströmt. Über eine Laderwelle 17 treibt die Turbine 15 einen Ladeluftverdichter 16 an. In der Einlaßleitung 3 ist ein Ladeluftkühler 25 angeordnet, welcher den verdichteten Frischluftstrom vor dem Eintritt in die Ladeluftleitung 3' kühlt. Der Anströmquerschnitt der Turbine 15 des Abgasturbolaers 2 ist durch entsprechende Stellmaßnahmen an einer Leitvorrichtung 9 variabel einstellbar. Durch Verstellung des Turbinenleitgitters über die Leitvorrichtung 9 der Turbine wird die Drehzahl der mechanisch starr über die Laderwelle 17 verbundenen Strömungsmaschinen 15, 16 und damit der Durchsatz des Frischluftstroms 22 am Verdichter 16 und die Verdichterleistung beeinflußt.

Über einen Abgasrückführungskanal 5 ist aus der Abgasleitung 4 der Brennkraftmaschine zur Emissionssenkung ein Teilstrom in die Einlaßleitung 3 rückführbar, insbesondere die temperaturabhängige Stickstoffoxid-Emission kann durch Abgasrückführungsbetrieb gesenkt werden, wobei in dem Abgasrückführungskanal 5 zur Abkühlung des rückgeführten Abgasstromes vor der Einmündung in die Einlaßleitung 3 und die dort erfolgende Vermischung mit dem verdichteten Frischluftstrom ein Abgaskühler 24 angeordnet ist. Nach der Einmündung 12 des Abgasrückführungskanals 5 in die Einlaßleitung 3 strömt der aus Frischluft und rückgeführtem Abgas bestehende Ladeluftstrom in die Ladeluftleitung 3' ein.

Zur Dosierung der rückgeführten Abgasmenge ist in dem Abgasrückführungskanal 5 ein Abgasrückführungsventil 8 mit variabel einstellbarem Durchgangsquerschnitt angeordnet. Das Abgasrückführungsventil 8 wird von einer Reglereinheit mit einem Stellsignal 18 angesteuert, welches in Abhängigkeit vom Betriebspunkt der Brennkraftmaschine 1 erzeugt wird. Der vorliegende Betriebspunkt der Brennkraftmaschine während des Betriebes wird in für sich bekannter Weise der Reglereinheit 6 durch Zuleitung entsprechender Betriebsparameter wie Drehzahl, Betriebslast usw. angezeigt. Die maximal rückführbare Abgasmenge ist abhängig vom Betriebspunkt der Brennkraftmaschine unterschiedlich, wobei ein Überschreiten der zulässigen Rückführrate, d. h. im Verhältnis der dem Frischluftstrom beigemischten Abgasmenge zu einer deutlichen Verschlechterung der Abgasemission durch Zunahme des Rußgehaltes des Abgases und darüber hinaus zu einer Erhöhung des Kraftstoffverbrauchs der Brennkraftmaschine führt.

Zur maximalen Emissionssenkung im Betrieb der Brennkraftmaschine 1 durch Abgasrückführung wird die Rückführrate von der Reglereinheit mit Stellmaßnahmen am Abgasrückführungsventil 8 über das Stellsignal 18 geregelt, wobei die betriebspunktspezifisch optimale Rückführrate als Führungsgröße vorgegeben wird. Die Reglereinheit 6 entnimmt die Führungsgröße 26 für die Regelung einem Kennfeldspeicher 7, in dem für eine Vielzahl von Betriebspunkten der Brennkraftmaschine die betriebsoptimalen Sollwerte abgelegt sind. Der genaue Ist-Wert der Rückführrate wird von der Reglereinheit 6 aus den Meßergebnissen zweier Sauerstoff-Sensoren 10, 11 ermittelt, welche einerseits in der Einlaßleitung 3 nach der Einmündung 12 des Abgasrückführungskanals 5 und andererseits in der Abgasleitung 4 der Brennkraftmaschine 1 angeordnet sind. Die Sauerstoff-Meßsonden 10, 11 messen den jeweiligen Sauerstoffgehalt des Abgasstroms vor der Einmündung 12 in die Einlaßleitung 3 und des Verbrennungsluftstroms nach der Einmündung 12 und erzeugen jeweils ein Meßsignal 20, 21, welches der Reglereinheit 6 zur Auswertung zugeführt wird. Aus dem Meßsignal 21 des Sauerstoffsensors 11 in der Abgasleitung 4 und dem Meßsignal 20 des Sauerstoffsensors 10 in der Einlaßleitung 3, welches den Sauerstoffgehalt des in die Zylinder Z1 bis Z6 einströmenden Verbrennungsluftstroms repräsentiert, welcher aus der verdichteten Frischluft und rückgeführtem Abgas besteht, ermittelt die Reglereinheit 6 den präzisen Ist-Wert der Rückführrate R nach der folgenden Zuordnungsvorschrift:

$$R = \frac{1}{\frac{[11] - [10]}{[10] - 0,23} + 1}$$

wobei R das Verhältnis der rückgeführten Abgasmenge zur gesamten Verbrennungsluftmenge bezeichnet, [11] den Sauerstoffgehalt des Abgasstroms repräsentiert durch das Meßsignal des Sauerstoffsensors 11 und [10] den Sauerstoffgehalt der Verbrennungsluft darstellt, welcher aus dem Meßsignal des Sauerstoffsensors 10 in der Einlaßleitung 3 der Brennkraftmaschine 1 mit Aussage über den Sauerstoffgehalt der Verbrennungsluft ermittelt wird. Der Sauerstoffgehalt des verdichteten Frischluftstroms 22 in der Einlaßleitung 3 liegt durch de Sauerstoffgehalt der Atmosphäre fest und ist in der Größengleichung mit 23% (Gew - %) angegeben.

Wie die Zuordnungsvorschrift zeigt, zieht die Reglereinheit 6 die jeweilige Differenz der Sauerstoffkonzentrationen zwischen Frischluft und Verbrennungsluft einerseits sowie Verbrennungsluft und Abgas andererseits zur Ermittlung der Rückführrate heran. Die Abgasrückführrate R kann in einfachen Anwendungfällen aus den Meßergebnissen im Aufbau einfacher Differenzmeßsonden ermittelt werden, welche entsprechend in den auszumessenden Leitungen angeordnet sind und wie oben die Differenz der jeweiligen Sauerstoffgehalte bestimmen.

Die Bestimmung der Absolutwerte des Sauerstoffgehaltes in der Verbrennungsluft (Sensor 10) und in dem Abgas (Sensor 11) gemäß dem Ausführungsbeispiel ermöglicht jedoch der Reglereinheit 6 zusätzlich die Regelung des Verbrennungsluftverhältnisses bei der Gemischbildung in den Zylindern Z1 bis Z6 der Brennkraftmaschine 1 unter Einbeziehung des vorher präzise ermittelten Ist-Wertes der Rückführungsrate R und des Sauerstoffgehaltes im Abgas. Die Reglereinheit erzeugt ein Stellsignal 19 für die Leitvorrichtung 9 des Abgasturboladers 2 und wirkt über den Anströmquerschnitt der Turbine 15 für den Abgasstrom auf den Frischluftmassenstrom 22 auf der Verdichterseite ein. In dem Regelkreis wird das Verbrennungsluftverhältnis an einen betriebspunktspezifisch vorgegebenen Sollwert angeglichen, welcher wie die Sollwerte der Rückführungsrate dem Kennfeldspeicher 7 entnommen wird. Der genaue Ist-Wert des Vebrennungsluftverhältnisses $\lambda_{AGR}$ im Abgasrückführungsbetrieb wird mit der zuvor bestimmten Rückführrate R nach der folgenden Größengleichung ermittelt:

$$\lambda_{AGR} = \lambda \left( 1 + \frac{[11]}{0,23} \bullet \frac{R}{1-R} \right)$$

$\lambda$ bezeichnet dabei das Verbrennungsluftverhältnis ohne Berücksichtigung des über den Rückführkanal 5 zurückgeführten zusätzlichen Sauerstoffes.

Es errechnet sich nach der folgenden Beziehung:

$$\lambda = \frac{\frac{[11]}{14,5} + 0,23}{0,23 - [11]},$$

wobei [11] die Sauerstoffkonzentration im Abgas repräsentiert und 23% den Sauerstoffgehalt der Atmosphäre in Gewichts-% und 14,5 den Mindestluftbedarf des Motors bei stöchiometrischer Verbrennung mit der Größeneinheit kg Luft/kg Kraftstoff entspricht.

Durch die äußerst genaue Ermittlung der Rückführrate R und des Luftverhältnisses $\lambda_{AGR}$ ist ein Abgasrückführungsbetrieb mit maximalen Rückführraten und damit größtmöglicher Reduktion der Stickoxidemission möglich, da als Führungsgrößen bei der Regelung die jeweils betriebspunktspezifisch maximalen Sollwerte vorgegeben werden können. Das Überschreiten dieser maximalen Sollwerte und die damit verbundene Schaffung unzulässig niedriger Luftverhältnisse ist durch die präzise Ermittlung der Ist-Werte ausgeschlossen.

Die Reglereinheit 6 regelt in jedem Betriebspunkt der Brennkraftmaschine die maximale Rückführrate und das optimale Verbrennungsluftverhältnis ein und erzeugt entsprechende Stellsignale 18, 19 für die Stellglieder Abgasrückführungsventil 8 und Turbinenleitgitter 9. Da die Rückführrate und das Verbrennungsluftverhältnis gleichzeitig und voneinander abhängig geregelt werden, ist auch solchen Betriebspunkten der Brennkraftmaschine, in denen das erforderliche Luftverhältnis durch zwei unterschiedliche Anströmquerschnitte der Turbine 15 des Abgasturboladers 2 erzeugbar ist, eine Stellung der Leitvorrichtung 9 eindeutig zuweisbar, nämlich genau die, welche der angestrebten Rückführrate entspricht.

Die erfindungsgemäße Ermittlung und Regelung der Rückführrate ist mit geringem baulichem Aufwand durchführbar und eignet sich insbesondere auch zur Nachrüstung bereits im Betrieb befindlicher, gesteuerter Abgasrückführungs-Vorrichtungen. Der Wirkungsgrad von Brennkraftmaschinen mit Abgasrückführungs-Vorrichtungen kann mit dem erfindungsgemäßen Verfahren deutlich gesteigert werden. Die genaue Ermittlung der Rückführrate aus den Meßergebnissen der Sauerstoffsensoren 10, 11, welche den Sauerstoffgehalt in den Gasströmen jeweils vor und nach der Einmündung des Abgasrückführungskanals in die Einlaßleitung messen, ist prinzipiell unabhängig von der Bauart der Rückführvorrichtung, d. h. deren Stellgliedern.

## Patentansprüche

1. Verfahren zum Betrieb einer Brennkraftmaschine, wobei zur Emissionssenkung Abgas durch einen Abgasrückführungskanal (5) aus einer Abgasleitung (4) der Brennkraftmaschine (1) in eine Einlassleitung (3) rückgeführt wird und eine Reglereinheit (6) die Rückführrate (R) des dem Frischluftstrom in der Einlassleitung (3) anteilig beigemischten Abgasstroms unter Angleich eines ermittelten Ist-Wertes an betriebspunktabhängig vorgegebene Sollwerte regelt und ein Abgasrückführungsventil (8) mit variabel einstellbarem Durchgangsquerschnitt ansteuert, wobei in den Gasströmen jeweils vor und nach einer Einmündung (12) des Abgasrückführungskanals (5) in die Einlaßleitung (3) der jeweilige Sauerstoffgehalt gemessen wird und die Reglereinheit (6) aus den Meßergebnissen direkt die vorliegende Rückführrate (R) ermittelt.

2. Verfahren nach Anspruch 1,
   **dadurch gekennzeichnet, daß** die Messungen der jeweiligen Sauerstoffgehalte im Verbrennungsluftstrom vor dem Eintritt in die Brennkraftmaschine (1) einerseits und im Abgasstrom (23) andererseits erfolgen.

3. Verfahren nach Anspruch oder 2,
   **dadurch gekennzeichnet, daß** die jeweilige Differenz der Sauerstoffkonzentrationen zwischen Frischluftstrom (22) mit Verbrennungsluftstrom vor dem Eintritt in die Brennkraftmaschine einerseits sowie zwischen Verbrennungsluftstrom und Abgasstrom 23 andererseits zur Ermittlung der Regelgröße herangezogen wird.

4. Verfahren nach einem der Ansprüche 1 bis 3,
   **dadurch gekennzeichnet, daß** die Reglereinheit (6) ein weiteres Stellglied (9) mit Wirkung auf den Frischluftmassenstrom (22) vor der Einmündung (12) des Abgasrückführungskanals (5) ansteuert und unter Einbeziehung der Rückführungsrate (R) und des Sauerstoffgehaltes im Abgasstrom (23) das Verbrennungsluftverhältnis ($\lambda_{AGR}$) bei der Gemischbildung in der Brennkraftmaschine regelt, wobei der Reglereinheit (6) Sollwerte des Verbrennungsluftverhältnisses ($\lambda_{AGR}$) in Abhängigkeit vom Betriebspunkt vorgegeben werden.

5. Verfahren nach Anspruch 4,
   **dadurch gekennzeichnet, daß** die Reglereinheit (6) im Regelkreis des Verbrennungsluftverhältnisses ($\lambda_{AGR}$) alternativ oder zusätzlich zum Stellglied (9) mit Wirkung auf den Frischluftmassenstrom (22) die Kraftstoffzumessung einstellt.

6. Verfahren nach einem der Ansprüche 1 bis 5,
   **dadurch gekennzeichnet, daß** in einem Kennfeldspeicher (7) für eine Vielzahl von Betriebspunkten der Brennkraftmaschine (1) die betriebsoptimalen Sollwerte abgelegt sind, welche die Reglereinheit (6) bedarfsweise als Führungsgröße (26) für die Regelung entnimmt.

7. Brennkraftmaschine mit einem Abgasrückführungskanal (5) zwischen einer Abgasleitung (4) und einer Einlassleitung (3), wobei in dem Abgasrückführungskanal (5) ein Abgasrückführungsventil (8) mit variabel einstellbarem Durchgangsquerschnitt angeordnet ist, welches von einer Reglereinheit (6) zur Regelung der Rückführrate (R) des dem Frischluftstrom in der Einlassleitung (3) anteilig beigemischten Abgasstroms über ein Stellsignal (18) ansteuerbar ist, wobei ein Sauerstoffsensor (10) in der Einlassleitung (3) nach einer Einmündung (12) des Abgasrückführungskanals (5) und ein weiterer Sauerstoffsensor (11) in einer abgasführenden Leitung (4, 5) angeordnet ist und die Sauerstoffsensoren (10, 11) derart signalübertragend mit einer Eingangsseite der Reglereinheit (6) der Rückführrate (R) verbunden sind, dass die Messwerte beider Sauerstoffsensoren (10, 11) in Beziehung zueinander bringbar sind zur direkten Bestimmung der Rückführrate (R).

## Claims

1. Method of operating an internal combustion engine, in which exhaust gas is recirculated via an exhaust gas recirculation passage (5) from an exhaust gas line (4) of the internal combustion engine (1) into an intake line (3) in order to reduce emissions and a control unit (6) controls the recirculation rate (R) of the exhaust gas flow proportionately admixed with the fresh air flow in the intake line (3) by matching a detected actual value with pre-set desired values specific to operating points and activates an exhaust gas recirculation valve (8) with a variably adjustable flow cross section, the respective oxygen content in the gas flows being measured respectively before and after an opening (12) from the exhaust gas recirculation passage (5) into the intake line (3) and the control unit (6) determining the prevailing recirculation rate (R) directly on the basis of the measurement results.

2. Method as claimed in claim 1,
   **characterised in that** the measurements of the respective oxygen contents are taken in the combustion air flow before entering the intake of the internal combustion engine (1) on the one hand and in the exhaust gas flow (23) on the other.

3. Method as claimed in claim 1 or 2,
   **characterised in that** the respective differences in oxygen concentrations between fresh air flow (22) and combustion air flow prior to entering the internal combustion engine on the one hand as well as between combustion air flow and exhaust gas flow 23 on the other hand, are used to determine the control variable.

4. Method as claimed in one of claims 1 to 3,
   **characterised in that** the control unit (6) activates another actuator (9) acting on the fresh air flow (22) before the opening (12) of the exhaust gas recirculation passage (5) and takes account of the recirculation rate (R) and the oxygen content of the exhaust gas flow (23) to control the combustion air ratio ($\lambda_{AGR}$) when forming the mixture in the internal combustion engine, desired values for the combustion air ratio (λAGR) dependent on operating point being pre-set in the control unit (6).

5. Method as claimed in claim 4,
   **characterised in that** in the circuit for controlling the combustion air ratio ($\lambda_{AGR}$), the control unit (6) adjusts fuel metering by acting on the fresh air flow (22) as an alternative to or in addition to the actuator (9).

6. Method as claimed in one of claims 1 to 5,
   **characterised in that** the optimum desired values for operation are stored in a characteristic map storage (7) for a plurality of operating points of the internal combustion engine (1) and are retrieved as management variables (26) for control purposes by the control unit (6) as and when required.

7. Internal combustion engine with an exhaust gas recirculation passage (5) between an exhaust gas line (4) and an intake line (3), an exhaust gas recirculation valve (8) with variably adjustable flow cross section being provided in the exhaust gas recirculation passage (5) which can be activated by a control unit (6) in order to control the recirculation rate (R) of the exhaust gas flow proportionately admixed with the fresh air flow in the intake line (3) by means of a control signal (18), in which an oxygen sensor (10) is provided in the intake line (3) downstream of an opening (12) of the exhaust gas recirculation passage (5) and another oxygen senor (1) is provided in a line carrying exhaust gas (4, 5) and the oxygen sensors (10, 11) are connected to an input side of the control unit (6) to transmit the recirculation rate (R) in the form of signals so that the measurement values of both oxygen sensors (10, 11) can be correlated with one another in order to determine the recirculation rate (R) directly.

## Revendications

1. Procédé pour faire fonctionner un moteur à combustion interne, selon lequel pour réduire les émissions, les gaz d'échappement sont renvoyés dans une conduite d'admission (3) par un canal (5) de renvoi des gaz d'échappement à partir d'un tuyau d'échappement (4) du moteur à combustion interne, et une unité de régulation (6) règle le taux de renvoi (R) du courant de gaz d'échappement ajouté proportionnellement au courant d'air frais dans la conduite d'admission (3), en réglant une valeur réelle déterminée sur des valeurs de consigne prédéterminées en fonction du point de fonctionnement, et commande une soupape (8) de renvoi des gaz d'échappement possédant une section transversale de passage réglable d'une manière variable, et selon lequel la teneur respective en oxygène est mesurée dans les courants de gaz respectivement en amont et en aval d'une embouchure (12) de raccordement du canal (5) de renvoi des gaz d'échappement dans la conduite d'admission (3), et l'unité de régulation (6) détermine directement le taux de renvoi présent (R) à partir des résultats de mesure.

2. Procédé selon la revendication 1, **caractérisé en ce que** les mesures des teneurs respectives en oxygène dans le courant d'air de combustion s'effectuent d'une part en amont de l'entrée dans le moteur à combustion interne (1) et d'autre part dans le courant (23) des gaz d'échappement.

3. Procédé selon la revendication 1 ou 2, **caractérisé en ce que** la différence respective des teneurs en oxygène entre le courant d'air frais (22) et le courant d'air de combustion d'une part avant l'entrée dans le moteur à combustion interne et d'autre part entre le courant d'air de combustion et le courant des gaz d'échappement est utilisée (23) des gaz d'échappement, pour la détermination de la grandeur de régulation.

4. Procédé selon l'une des revendications 1 à 3, **caractérisé en ce que** l'unité de régulation (6) commande un autre organe de réglage (9) en agissant sur le courant massique d'air frais (22) en amont de l'embouchure (12) du canal (5) de renvoi des gaz d'échappement et, en utilisant le taux de renvoi (R) et la teneur en oxygène dans le courant (23) des gaz d'échappement, règle le taux d'air de combustion ($\lambda_{AGR}$) dans la formation du mélange dans le moteur à combustion interne, les valeurs de consigne du taux d'air de combustion ($\lambda_{AGR}$) étant prédéterminées pour l'unité de régulation (6) en fonction du point de fonctionnement.

5. Procédé selon la revendication 4, **caractérisé en ce que** l'unité de régulation (6) dans le circuit de régulation du taux d'air de combustion ($\lambda_{AGR}$) règle, en alternance avec ou en plus de l'organe de réglage (9), l'introduction dosée de carburant, en agissant sur le courant massique d'air frais (22).

6. Procédé selon l'une des revendications 1 à 5, **caractérisé en ce que** dans une mémoire (7) de champs de caractéristiques pour une multiplicité de points de fonctionnement du moteur à combustion interne (1) sont mémorisées les valeurs de consigne optimales pour le fonctionnement, que l'unité de régulation (6) prélève le cas échéant en tant que grandeur pilote (26) pour la régulation.

7. Moteur à combustion interne comportant un canal (5) de renvoi des gaz d'échappement entre un tuyau d'échappement (4) et une conduite d'admission (3), dans lequel dans le canal (5) de renvoi des gaz d'échappement est disposée une soupape (8) de renvoi des gaz d'échappement, qui possède une section transversale de passage réglable de façon variable et peut être commandée par une unité de régulation (6) servant à régler le taux de renvoi (R) du courant des gaz d'échappement ajoutés proportionnellement au courant d'air frais dans la conduite d'admission (3), par l'intermédiaire d'un signal de réglage (18), et dans lequel un capteur d'oxygène (10) situé dans la conduite d'admission (3) est disposé, en aval d'une embouchure (12) du canal (5) de renvoi des gaz d'échappement et un autre capteur d'oxygène (11) est disposé dans une conduite (4,5) d'évacuation des gaz d'échappement, et les capteurs d'oxygène (10,11) sont reliés, de manière à réaliser une transmission de signaux, à un côté entrée de l'unité de régulation (6) du taux de renvoi (R) de telle sorte que les valeurs de mesure des deux capteurs d'oxygène (10,11) peuvent être mises en rapport l'une avec l'autre pour la détermination directe du taux de renvoi (R).